Europäisches Patentamt

European Patent Office

Office européen des brevets

(19)

(11) EP 0 878 884 A2

(12) EUROPÄISCHE PATENTANMELDUNG

(43) Veröffentlichungstag:
18.11.1998 Patentblatt 1998/47

(51) Int. Cl.$^6$: H01S 3/16

(21) Anmeldenummer: 98810445.1

(22) Anmeldetag: 15.05.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 16.05.1997 CH 1146/97

(71) Anmelder:
Weber, Heinz Paul, Prof. Dr.
CH-3122 Kehrsatz (CH)

(72) Erfinder:
• Weber, Heinz Paul, Prof. Dr.
3122 Kehrsatz (CH)

• Luethy, Willy, Prof. Dr.
3095 Spiegel (CH)
• Huber, Thomas
4900 Langenthal (CH)

(74) Vertreter:
Roshardt, Werner Alfred, Dipl.-Phys. et al
Keller & Partner
Patentanwälte AG
Zeughausgasse 5
Postfach
3000 Bern 7 (CH)

(54) Dotierter Festkörper und dessen Beeinflussung transmittierter Strahlung

(57) Zur Beeinflussung einer einen annähernd gleichmässig dotierten Festkörper durchstrahlenden, dritten Strahlung wird eine kurzwellige erste Strahlung - insbesondere UV-Strahlung - zur Erzeugung von Farbzentren in den Festkörper eingestrahlt. Die gebildeten Farbzentren werden dann mit einer zweiten, gegenüber der ersten langwelligeren Strahlung bestrahlt. Ein Teil der Energie der zweiten Strahlung wird von den Farbzentren an das in ihrer unmittelbaren Nähe befindliche Dotierungsmaterial zur Wechselwirkung mit diesem transferiert. Die Farbzentren wirken als Sensibilisatoren für das Dotierungsmaterial. Das Dotierungsmaterial wird nicht mehr direkt, sondern über die Farbzentren angeregt. Aufgrund des breiteren Absorptionsspektrums der Farbzentren und einer direkten Anregung des Dotierungsmaterials ergibt sich ein erhöhter Pumpwirkungsgrad. Auch lassen sich in einer bevorzugten Ausführungsform die Farbzentren nur im Bereich eines zu erwartenden Modenvolumens in einem aktiven Medium ausbilden, wodurch sich die erzeugte Strahlqualität wesentlich verbessern lässt; auch ist die derart erhaltene Strahlqualität zeitlich stabiler.

EP 0 878 884 A2

## Beschreibung

Die Erfindung betrifft ein Verfahren zur Beeinflussung einer Strahlung in einem dotierten Festkörper, ein Verfahren zur Herstellung eines aktiven Mediums gemäss dem Oberbegriff des Patentanspruchs 3 und einen Festkörper mit einer strahlungsverstärkenden, annähernd gleichmässigen Dotierung.

## Aufgabe der Erfindung

Aufgabe der Erfindung ist es, insbesondere eine Strahlungserzeugung bzw. -verstärkung zu schaffen, welche gegenüber den bekannten Verfahren einen höheren Wirkungsgrad und eine bessere Strahlqualität aufweist.

## Lösung der Aufgabe

Die Aufgabe wird dadurch gelöst, dass gegenüber den bekannten Verfahren mit den bekannten Festkörpern nicht mehr eine direkte Anregung des Dotierungsmaterials im Festkörper erfolgt, sondern "zwischengeschaltet" über Farbzentren im Festkörper. Die Farbzentren absorbieren die Pumpstrahlung (zweite Strahlung) breitbandig und ein Teil der absorbierten Strahlungsenergie nimmt dann schmalbandig gezielt eine Anregung des Dotierungsmaterials, welches sich in unmittelbarer Nähe zu den Farbzentren befindet, vor.

Die Farbzentren werden durch Bestrahlung des dotierten Festkörpers erhalten. Erfolgt diese Bestrahlung mit einem derart geformten Strahl, wie er sich in einem Resonator dessen Strahlungseigenwert entsprechend ausbilden würde, so ist "aktives Material" räumlich nur im tatsächlichen späteren Strahlungsverlauf vorhanden. D.h. eine Verstärkung der Resonatorstrahlung erfolgt nur innerhalb dieses Raumbereichs. Hierdurch lässt sich eindeutig die Modenstruktur des zu erzeugenden Strahles bestimmen bzw. ihn in diesen Mode zu "zwingen".

Der Festkörper ist bis auf Herstellungstoleranzen annähernd gleichmässig über sein gesamtes Volumen dotiert. D. h. radial eingestrahlte Pumpstrahlung wurde bisher im gesamten Volumen absorbiert. Zur Strahlungserzeugung bzw.-verstärkung bei der Erfindung werden jedoch nur Raumbereiche verwendet, in denen der erzeugte Strahlungsverlauf beispielsweise entsprechend dem Resonatoreigenwert verläuft. Ein Grossteil der Pumplichtstrahlung diente also bei den bekannten Festkörpern als aktives Medium lediglich zu deren Erwärmung und trug nicht zur Strahlungserzeugung bei.

Anders jedoch bei einer Ausführungsvariante der Erfindung, bei der die Farbzentren nur in einem Raumbereich angeordnet sind, der durch den Resonatoreigenwert vorbestimmt ist. Die Pumpstrahlung passiert somit nahezu ohne Absorption Gebiete (Randgebiete) des Festkörpers, welche nicht der Strahlungserzeugung dienen. Sie wird lediglich in dem durch den Eigenwert vorgegebenen Bereich von den nur dort befindlichen Farbzentren absorbiert, welche dann erst das Dotierungsmaterial ihrer unmittelbaren Umgebung pumpen.

Eine Erzeugung von Farbzentren in einem Bereich, wie er durch den Resonatoreigenwert vorgegebenen ist, lässt sich erreichen, indem zur Farbzentrenbildung der Festkörper mit einem Strahl bestrahlt wird, dessen Intensitätsverlauf in Ausbreitungsrichtung und quer hierzu demjenigen des Resonatoreigenwerts entspricht. Mit optischen Systemen lässt sich dieser gewünschte Strahlverlauf zum "Einschreiben" der Farbzentren einfach erzeugen.

Die Bildung von Farbzentren in Festkörpern erfolgt durch die Absorption eines Strahlungsquants unter Bildung frei beweglicher Ladungsträger, nämlich von Elektronen und Defektelektronen. Beide Ladungsträger können getrennt an geeigneten Gitterstörstellen des Festkörpers unter Bildung von Farbzentren gebunden werden. Gitterstörstellen werden hervorgerufen durch die obenerwähnte Dotierung des Festkörpers sowie auch durch nicht genannte Verunreinigungen oder sonstige Störstellen im Aufbau. Der Festkörper ist bevorzugt ein Kristall. Farbzentren lassen sich aber auch in Gläsern im besonderen in Quarzgläsern hervorrufen. Unter den Kristallen sind die Alkalihalogenide (LiF, LiCl, LiBr, LiAt), Granate, ... mit einer Dotierung aus Übergangsmetallen bzw. Lanthaniden prädestiniert.

Der Ausdruck Farbzentren rührt von deren Entdeckung her. Hier wurde mit Röntgenstrahlen eine bräunliche Verfärbung im Material erzeugt. Nachfolgend wird jedoch der Ausdruck Farbzentren auch für eine nicht mit dem Auge feststellbare Veränderung durch eine kurzwellige Strahlung, beginnend im ultravioletten Bereich (Wellenlänge kleiner 280 nm) über Röntgenstrahlung bis einschliesslich Beginn der Gammastrahlung verstanden.

## Kurze Beschreibung der Erfindung

Erfindungsgemäss werden Farbzentren zur Sensibilisierung von Dotierungsmaterial in einem Festkörper verwendet. Infolge dieser Sensibilisierung wird eine eingestrahlte (zweite) Strahlung erst über die Farbzentren an das Dotierungsmaterial übermittelt. Zur Erläuterung der Erfindung werden die nachfolgenden Figuren verwendet, wobei

Fig. 1      die Übergänge eines Erbiumions in $YAlO_3$ als Beispiel für einen dotierten Festkörper, in dem Farbzentren zur erfindungsgemässen Sensibilisierung erzeugbar sind,

Fig. 2    eine Skizze zur Erkıärung einer Formung eines Strahls für eine gezielte Erzeugung von Farbzentren in einem gewünschten Raumbereich und

Fig. 3    das Transmissionsspektrum für einen Farbzentren aufweisenden YAlO$_3$:Er$^{3+}$ im Verhältnis zu einem ohne zeigt.

Ein Auswahlverfahren zur Ermittlung geeigneter Festkörpermaterialien, Dotierungsmaterialien sowie der Wellenlängen der zu verwendenden Strahlung wird nachfolgend an Hand eines mit Erbium dotierten YAlO$_3$-Kristalls beschrieben. Die Durchführung dieses zur Erfindung führenden Auswahlverfahrens ist besonders einfach an dem nachfolgenden Beispiel studier- und erlernbar. Es soll den Fachmann dahin führen, dieses Verfahren bei beliebigen Materialien anzuwenden und experimentell zu optimieren.

Der Erbium dotierte YAlO$_3$-Kristall wird mit der Strahlung einer Quecksilberdampflampe (Wellenlänge 253,7 nm) als kurzwellige, erste Strahlung einige Sekunden bestrahlt. Hierbei entstehen stabile Farbzentren, welche als braungelbliche Einfärbung sichtbar sind. Es sind sog. O$_I$-, O$_{II}$- und O$_{III}$-Farbzentren entstanden. Diese Farbzentren lassen sich durch eine Erwärmung auf über 300°C und eine Heizungsdauer von einigen Stunden wieder entfernen.

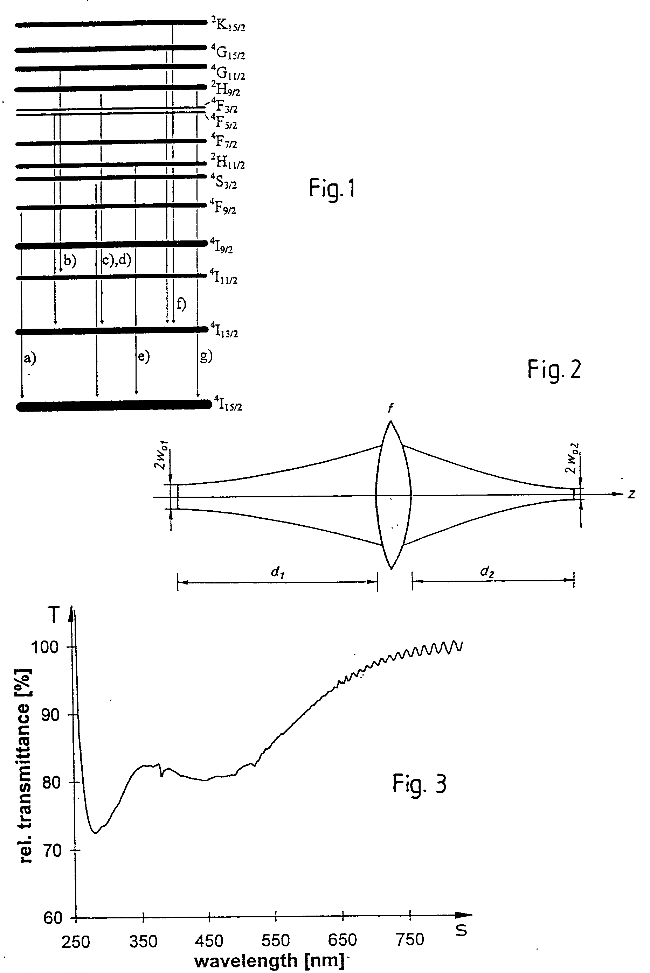

Die Strahlung der Quecksilberdampflampe wird nun abrupt abgeschaltet und der zeitliche Intensitätsverlauf einer vom Kristall ausgehenden Lumineszensstrahlung gemessen. Es werden Strahlungen mit den Wellenlängen 677,3 nm, 625,5 nm, 553,2 nm, 545,9 nm, 533,0 nm 474,3 nm und 405,0 nm gemessen. Die gemessenen Strahlungen sind schmalbandig. Es handelt sich hier um Strahlungen, welche vom Er$^{3+}$-Ion emittiert worden sind und auch mit den bereits bekannten Emissionslinien des Erbium-Ions übereinstimmen. Würden die Strahlungen von den Farbzentren stammen, wären sie breitbandig. Eine Auswahl von Übergängen unterschiedlicher Anregungsniveaus zeigt **Figur 1**, wobei auf der rechten Seite jeweils die Kennzeichnung des betreffenden Niveaus eingetragen ist. Die nach unten gerichteten Pfeile zeigen Übergänge zwischen den Niveaus an.

Der zeitliche Abklingverlauf der Intensität der verschiedenen Emissionslinien kann durch die Gleichung

$$I = A(a_1 e^{-(t/t1)} + a_2 e^{-(t/t2)} + a_3 e^{-(t/t3)})$$

angenähert werden. Für die in der **Figur 1** aufgezeigten Emissionslinien a) bis g) ergeben sich die nachfolgenden Parameter:

| Linie | Wellenlänge [nm] | $t_1$ [s] | $t_2$ [s] | $t_3$ [s] | A | $a_1$ | $a_2$ | $a_3$ |
|---|---|---|---|---|---|---|---|---|
| a) | 677,3 | 17 | 152 | - | 0,068 | 0,68 | 0,32 | - |
| b) | 625,5 | 15 | 111 | - | 0,052 | 0,86 | 0,14 | - |
| c) | 553,2 | 15 | 103 | 369 | 1,000 | 0,46 | 0,39 | 0,15 |
| d) | 545,9 | 13 | 94 | 338 | 0,988 | 0,45 | 0,38 | 0,17 |
| e) | 533,0 | 12 | 91 | 339 | 0,335 | 0,51 | 0,35 | 0,14 |
| f) | 474,3 | 11 | 92 | - | 0,100 | 0,87 | 0,13 | - |
| g) | 405,0 | 12 | 124 | - | 0,039 | 0,86 | 0,14 | - |

Die Fluoreszensabklingzeiten der gemessenen Spektrallinien liegen somit im Sekundenbereich (bis 350 Sekunden).

Erfindungsgemäss werden nun die durch die kurzwellige erste Strahlung erzeugten Farbzentren nach ihrer Erzeugung mit einer zweiten, gegenüber der ersten langwelligeren Strahlung bestrahlt, welche keine weiteren Farbzentren erzeugt und auch keine eliminiert. Bestrahlt man die in YAlO$_3$:Er$^{3+}$ erzeugten Farbzentren mit weissem Licht, so tritt ebenfalls eine, wenn auch nur schwache Lumineszenz der Linien mit den Wellenlängen 533,0 nm, 545,9 nm, 553,2 nm und 677,3 nm auf.

Um feststellen zu können, ob ein nach dem oben aufgeführten erfindungsgemässen Verfahren behandelter Festkörper unter Verwendung der Farbzentren als Sensibilisatore für das Dotierungsmaterial in einem Laserresonator als aktives Medium verwendbar ist, sind die nachfolgenden Überlegungen anzustellen:

Eine Änderung der Besetzungsdichte n [Anzahl angeregte Ionen pro Kubikzentimeter] des "lasernden" Energieniveaus gehorcht der nachfolgenden Gleichung

$$\frac{dn}{dt} = \frac{S}{\tau_1} - \frac{n}{\tau_2}$$

wobei S die Dichte der Farbzentren,
$\tau_1$ die Übertragungszeit vom Farbzentrum auf das (aktive) Dotierungmaterial und
$\tau_2$ die Lebensdauer des angeregten Niveaus des Dotierungsmaterials ist.

Ein Gleichgewichtszustand ist für dn/dt = 0 erreicht. Hieraus ergibt sich dann die Besetzungsdichte für das angeregte bzw. anzuregende Niveau

$$n_o = \frac{S \cdot \tau_2}{\tau_1} .$$

Ist die Besetzungsdichte des oberen, angeregten Niveaus $n_o$ grösser als diejenige des unteren Niveaus $n_u$, ist eine "Laseremission" möglich. Das obenaufgeführte Beispiel soll nur den Auswahlvorgang aufzeigen.

Ein mit weissem Licht gepumpter, Farbzentren aufweisender $YAlO_3:Er^{3+}$ lässt sich nicht als aktives Lasermaterial unter Verwendung der mit der Strahlung einer Quecksilberdampflampe erzeugten Farbzentren als Sensibilisatore für das Dotierungsmaterial verwenden. Der Energietransfer von den Farbzentren auf das Dotierungsmaterial ist zu langsam. Die Lebensdauer des $^4S_{3/2}$-Niveaus beträgt nämlich 100 µs. Wie bereits oben ausgeführt, lassen sich jedoch an diesem Material die Merkmale der Erfindung gut studieren und können somit auf entsprechende Materialien übertragen werden.

Zur Auswahl eines geeigneten Festkörper-Farbzentren-Dotierungsensembles erzeugt man Farbzentren mit einer kurzwelligen Strahlung (kleiner 280 nm)[erste Strahlung]. Diese erzeugten Farbzentren müssen gegenüber einer später zu verwendenden Pumplichtstrahlung [zweite Strahlung] stabil sein. Die Farbzentren sollten auch gegenüber Umgebungsbedingungen stabil sein; falls nicht, müsste dann der Festkörper beispielsweise gekühlt werden. Die Anregungsspektren und deren Lebensdauern werden dann gemäss den obengemachten Ausführungen ermittelt. Die Lebensdauern der meisten Dotierungsmaterialen können entsprechenden Nachschlagwerken, Veröffentlichungen und Computerdatenbanken entnommen werden. Diese Lebensdauern werden nun mit den gemessenen unter Vorhandensein der erzeugten Farbzentren verglichen. Liegen die Lebensdauerliteraturwerte im Bereich der gemessenen Werte oder sind sie länger, so eignet sich der derart behandelte, dotierte Festkörper als aktives Medium.

Optische Resonatoren zur Erzeugung von Laserstrahlung weisen mindestens eine Pumpstrahlungsquelle, ein aktives Medium und zwei einander gegenüberliegende Spiegel auf. Sind die optischen Eigenschaften der optischen Elemente und deren Ort in einem Resonator bekannt, so kann die sich ausbildende Strahlungskonfiguration im Resonator berechnet werden. Die Strahlungskonfiguration bildet sich in der Regel als gaussförmiger Strahl aus. Ein gaussförmiger Strahl weist Zylindersymmetrie auf. Gemäss "Wissensspeicher Lasertechnik", VEB Fachbuchverlag Leipzig 1982, Seite 35 hat die elektrische Feldstärke dieses Strahls die Form:

$$\Gamma = (\sqrt{2} \cdot r/w)^l -- \cdot L^l p \cdot (2 r^2/w^2) \exp (-i (P(z) + (kr^2)/(2q(z)) + l\phi(z)))$$

wobei

p (ganze Zahl) die radiale Modennummer

l (ganze Zahl) die azimutale Modennummer und

$L^1$ das allgemeine Laguerre-Polynom ist.

Für den Grundmode eines Strahls mit p = 0 und l = 0 vereinfacht sich obige Gleichung zu

$$\Gamma = (w_0/w(z)) \exp(-r^2/w^2(w)) \cdot \exp(-i(kz - \phi(z) + r^2/2R(z)))$$

wobei $w_0$ der Radius der Strahltaille,

z die Strahlausbreitungsrichtung,

$$w^2 = w_0{}^2 \cdot (1 + (sz)/(\pi w_0{}^2))$$

das Quadrat des Strahlradius am Ort z und

s die Wellenlänge der Strahlung ist.

Weitere Angaben zu den Gleichungen können dem obengenannten Literaturhinweis entnommen werden.

Mittels optischer Abbildungssysteme können Divergenz und Radius der Strahltaille wunschgemäss geeignet eingestellt werden.

In einer bevorzugten Ausführungsform der Erfindung sollen nun die Farbzentren in einem Festkörper derart angeordnet werden, dass sie nur dort vorhanden sind, wo auch letztendlich der zu verstärkende bzw. erzeugende Strahl verläuft. Dieser Strahl soll eine dem theoretischen Eigenwert entsprechende Strahlkonfiguration in einem Laserresonator gemäss obenstehenden Ausführungen aufweisen.

Für den Laserbetrieb werden die Farbzentren von einer Pumpstrahlung (zweite Strahlung) gepumpt und transferieren dann als Sensibilisatoren wirkend an das Dotierungsmaterial in ihrer unmittelbaren Umgebung einen Grossteil ihrer Energie. Als Pumpstrahlung wählt man nun eine Strahlung, welche die Lebensdauer der Farbzentren nicht bzw. nahezu nicht feststellbar verringert und vom Dotierungsmaterial gar nicht oder nur vernachlässigbar absorbiert wird. Die Pumpstrahlung wird somit durch den Festkörper bis zu den Farbzentren ohne nennenswerte Absorption transmittiert, von diesen wenigstens teilweise absorbiert und ein Teil der absorbierten Energie dann zum Dotierungsmaterial in unmittelbarer Nähe transferiert. Die Idee ist, eine Laserstrahlung erzeugende Anregung nur in dem durch den Eigenwert vorgegebenen Festkörperbereich möglichst verlustfrei zu bringen.

Um dies zu erreichen, wird ein gemäss dem obenaufgeführten Auswahlverfahren ermitteltes Festkörper-Farbzentren-Dotierungsensemble entsprechend der ermittelten Kontur einer sich in einem Resonator ausbildenden (Eigenwert) oder auch gewünschten Strahlungskonfiguration durchstrahlt.

Eine entsprechende Strahlformung ist mittels der optischen Abbildungsgesetze unter Verwendung von Linsen möglich; siehe beispielsweise S. 36 und 37 der bereits oben zitierten Literaturstelle "Wissensspeicher Lasertechnik" mit Blick auf Figur 2.

$$d_2 - f = \frac{(d_1 - f) \cdot f^2}{(d_1 - f)^2 + ((\pi w_{01}{}^2)/s)^2}$$

und

$$w_{02} = w_{01} \frac{f}{((d_1 - f)^2 + ((\pi w_{01}{}^2)/s)^2)^{1/2}}$$

Ein Teil der Energie der in den Farbzentren absorbierten Strahlung wird in Wärme umgewandelt. Auch geht ein Teil der von den Farbzentren an das Dotierungsmaterial transferierten Energie in Wärme über. Aus diesem Grund erwärmt sich der gezielt mit Farbzentren versehene (und natürlich auch Dotierungsmaterial aufweisende) Festkörperbereich stärker als der restliche Festkörperbereich. Dieses Phänomen würde auch ohne Farbzentren auftreten, wie in jedem bereits bekannten aktiven Festkörperlaserstab (-platte). Aufgrund dieser Erwärmung kommt es an den Strahlaus- und auch -eintrittsflächen zu einer thermischen Verwölbung d.h. einer Linsenwirkung. Diese Linsenwirkung trat auch bei den herkömmlich dotierten Festkörpern auf. Durch diese Linsenausbildung ergibt sich nun ein anderer Resonatoreigenwert und damit ein anderer Strahlungszustand des erzeugten Strahles. Die Strahlkonfiguration, insbesondere ihr Durchmesser und ihre Divergenz ändern sich in Abhängigkeit der Intensität der Pumpstrahlung sowie in Abhängigkeit vom Einschaltzeitpunkt der Pumpstrahlung. Diese Instabilität ist u. a. bei Präzisionsmaterialbearbeitungen mit einem fokussierten Laserstrahl äusserst störend.

Diese Strahlinstabilitäten lassen sich nun stark reduzieren bzw. nahezu ganz vermeiden, indem gemäss einer bevorzugten Ausführungsform der Erfindung keine Farbzentren im Stabendbereich vorhanden sind. Der Abstand des Farbzentrenbeginns von der jeweiligen Endfläche des Festkörpers wird so gross gewählt, dass die im Farbzentren und Dotierung aufweisenden aktiven Volumen stattfindende Erwärmung eine Verformung dieser Randflächen nicht mehr oder nur in einem äusserst stark verringerten Masse hervorrufen kann.

Um dies zu erreichen werden die Farbzentren wie oben erwähnt gebildet, jedoch nachfolgend mit einer weiteren Strahlung (vierte Strahlung) lediglich in den gewünschten Gebieten fixiert. Je nachdem, um welches Festkörpergrundmaterial bzw. um welche Dotierung es sich handelt und welche weitere Strahlung verwendet wird, kann auch eine Eliminierung bereits gebildeter Farbzentren erfolgen.

Man kann natürlich auch gleichzeitig zwei Strahlen einstrahlen, wobei dann eine Ausbildung stabiler Farbzentren nur im Überlagerungsgebiet der beiden Strahlen entsteht. Um beim Beispiel des obigen stabförmigen Festkörpers zu bleiben, strahlt man dann mit der vorgegebenen Strahlkonfiguration axial ein und mit der weiteren Strahlung dann senkrecht zum ersten Strahlungsverlauf, derart, dass die Stabendbereiche nicht bestrahlt werden. Die Intensitäten der beiden Strahlungen sind dann entsprechend abzugleichen. Die beiden Strahlungen können unterschiedliche Wellenlängen haben. Sie können aber auch gleiche Wellenlängen haben, wie beispielsweise bei einem KCl:Li-Kristall, der mit zwei sich überlagernden Strahlen einer Wellenlänge von 266 nm zur Erzeugung von Farbzentren bestrahlbar ist.

Sollte zu einem späteren Zeitpunkt eine andere räumliche Konfiguration von Farbzentren gewünscht werden, so können diese durch eine Erwärmung des Festkörpers über einen längeren Zeitraum wieder zum Verschwinden gebracht und anschliessend eine neue, andere Konfiguration "eingeschrieben" werden.

Durch eine Erzeugung von Farbzentren in einem dotierten Festkörper können nicht nur strahlungsverstärkende Bereiche erzeugt werden; es können auch Gebiete unterschiedlicher Transmission erzeugt werden. In **Figur 3** ist die Transmission eines Festkörpers mit Farbzentren im Verhältnis zu einem Festkörper ohne Farbzentren über der Wellenlänge $s$ einer durchstrahlten Strahlung aufgetragen. Es handelt sich hierbei um den bereits schon oben erwähnten $YAlO_3$:$Er^{3+}$-Kristall. Eine Transmission $T$ auf der linken Diagrammseite ist möglich, da als Referenz ein $YAlO_3$:$Er^{3+}$ ohne Farbzentren verwendet wurde, dessen Transmission im Wellenlängenbereich bei 250 nm kleiner ist als diejenige des $YAlO_3$:$Er^{3+}$ mit Farbzentren. Unter Ausnützung dieses Effekts lassen sich apodizierende Blenden für vorgegebene Strahlungsverläufe herstellen.

## Patentansprüche

1.  Verfahren zur Beeinflussung einer einen annähernd gleichmässig dotierten Festkörper durchstrahlenden dritten Strahlung, indem eine kurzwellige erste Strahlung - insbesondere eine UV-Strahlung - zur Erzeugung von Farbzentren in den Festkörper eingestrahlt wird, die im Festkörper gebildeten Farbzentren mit einer zweiten, gegenüber der ersten langwelligeren Strahlung bestrahlt werden, ein Teil der Energie der zweiten Strahlung nur von den Farbzentren an das in ihrer unmittelbaren Nähe befindliche Dotierungsmaterial zur Wechselwirkung mit diesem transferiert wird.

2.  Verfahren nach Anspruch 1, **dadurch gekennzeichnet**, dass als zweite Strahlung eine Strahlung mit einem Wellenlängenbereich verwendet wird, der die Lebensdauer der Farbzentren nicht beeinflusst, die zweite Strahlung abrupt ausgeschaltet, die Fluoreszensabklingkonstante für unterschiedliche Anregungsniveaus des Dotierungsmaterials gemessen sowie die gemessene Abklingkonstante mit derjenigen ohne Vorhandensein von Farbzentren verglichen wird und bevorzugt in einem nächsten Schritt Festkörpermaterial, Dotierungsmaterial und die zweite Strahlung derart ausgewählt werden, dass das Verhältnis einer Abklingkonstante einer vom Dotierungsmaterial emittierten Strahlung bei Vorhandensein von Farbzentren zur Abklingzeit der Strahlung desselben Anregungsniveaus des Dotierungsmaterials ohne Farbzentren im Bereich von 1 oder kleiner als 1 ist, um das derart ermittelte FestkörperFarbzentren-Dotierungsensemble als aktives Medium für einen Festkörperlaser zu verwenden.

3.  Verfahren zur Herstellung eines aktiven Mediums für einen Laser mit einem dotierten, Farbzentren durch Bestrahlung aufweisenden Festkörper gemäss Anspruch 2, **dadurch gekennzeichnet**, dass zur Bestrahlung mit einer ersten Strahlung ein räumlicher Strahlungsverlauf derart ausgeformt wird, dass er im Festkörper den Verlauf eines zu erwartenden Strahlungseigenwerts eines vorgegebenen Resonators unter Bildung von Farbzentren einschreibt, für den der Festkörper als aktives Medium vorgesehen ist.

4.  Verfahren nach Anspruch 3, **dadurch gekennzeichnet**, dass der mit der ersten Strahlung bestrahlte Raumbereich lediglich teilweise mit einer vierten Strahlung bestrahlt wird, um dort die Farbzentren zu eliminieren oder zu fixieren und insbesondere die Bildung von Farbzentren in den Randbereichen des Festkörpers in einer vorgegebenen Schichtdicke eliminiert wird.

5. Verfahren nach Anspruch 3 oder 4, **dadurch gekennzeichnet**, dass der Farbzentren in einem vorgegebenen Bereich aufweisende dotierte Festkörper einer Temperaturbehandlung unterzogen wird, um anschliessend Farbzentren in einem anderen Raumbereich zu erzeugen.

6. Festkörper mit einer strahlungsverstärkenden, annähernd gleichmässigen Materialdotierung hergestellt, nach einem Verfahren gemäss der Ansprüche 3 bis 5 mit mittels einer ersten Strahlung - insbesondere einer UV-Bestrahlung - herstellbaren Farbzentren als Sensibilisatoren für das in ihrer unmittelbaren Nähe befindliche Dotierungsmaterlal bei Bestrahlung mit einer Pumpstrahlung, welche im farbzentrenfreien Festkörperteil vernachlässigbar von der Dotierung absorbierbar ist und im farbzentrenaufweisenden Raumbereich die Dotierung in einen strahlungsangeregten Zustand bringt.

7. Festkörper nach Anspruch 6, **dadurch gekennzeichnet**, dass die Farbzentren lediglich in einem Raumbereich vorhanden sind, der dem Verlauf eines zu erwartenden Strahlungseigenwerts für einen Resonator entspricht, in welchem der Festkörper einsetzbar sein soll.

8. Festkörper nach Anspruch 6 oder 7, **dadurch gekennzeichnet**, dass in einer Schichtdicke in den Randbereichen, insbesondere im Bereich eines vorgesehenen Strahlaus- und/oder -eintritts, keine Farbzentren vorhanden sind.

9. Festkörper nach einem der Ansprüche 6 bis 8, **dadurch gekennzeichnet**, dass die durch die erste Strahlung gebildeten Farbzentren durch eine thermische Behandlung des Festkörpers eliminierbar sind, um anschliessend bevorzugt in einem anderen Raumbereich durch eine erneute Bestrahlung einschreibbar zu sein.

Fig.1

Fig.2

Fig. 3

rel. transmittance [%]

wavelength [nm]